# FASCICULE DE BREVET EUROPEEN

(11) **EP 3 898 337 B1**
(45) Date de publication et mention de la délivrance du brevet: **05.04.2023**
(21) Numéro de dépôt: 19868193.4
(22) Date de dépôt: 29.11.2019
(51) Int. Cl.: B60R 13/02

(54) **ACCOSTAGE ENTRE DEUX GARNITURES DE PORTES AVANT ET ARRIÈRE**
ANDOCKEN ZWISCHEN ZWEI VORDEREN UND HINTEREN TÜRVERKLEIDUNGEN
DOCKING BETWEEN TWO FRONT AND REAR DOOR TRIMS

(30) Priorité: 20.12.2018 FR 1873708
(43) Date de publication de la demande: 27.10.2021
(73) Titulaire: PSA Automobiles SA, 78300 Poissy (FR)
(72) Inventeur: VILLA, Laurent, 91460 MARCOUSSIS (FR); RIVIERRE, Laurent, 75015 PARIS (FR)
(86) Numéro de dépôt international: PCT/FR2019/052861
(87) Numéro de publication internationale: WO 2020/128188

(56) Documents cités:
- FR-A1- 2 911 574
- GB-A- 2 293 798
- GB-A- 2 355 438
- US-A1- 2007 108 742
- US-A1- 2014 191 533
- US-B2- 9 033 388

## Description

### Domaine technique

L'invention a trait au domaine de l'habillement d'habitacle d'automobile et plus particulièrement à une garniture intérieure et un véhicule équipé d'une garniture intérieure.

### Technique antérieure

Le document de brevet publié US 9,033,388 B2 divulgue un montant central sur lequel une garniture intérieure est fixée. La garniture intérieure comprend des nervures de rigidification. Des fixations de forme sont formées aux extrémités inférieure et supérieure de la garniture intérieure. Cependant, ce type de fixation ne garantit pas un maintien efficace de la garniture intérieure diminuant ainsi la perception de qualité de l'habitacle.

Les documents US2007108742, US2014191533 et FR2911574 décrivent des garnitures intérieures de véhicule et leur fixation sur des éléments de la structure du véhicule. Le document US2007108742 correspond au préambule de la revendication 1.

### Exposé de l'invention

L'invention a pour objectif de pallier au moins un des inconvénients de l'état de la technique susmentionné. Plus particulièrement, l'invention a pour objectif d'améliorer la fixation de la garniture.

L'invention a pour objet un véhicule automobile comprenant les caractéristiques de la revendication 1.

Selon un mode avantageux de l'invention, l'au moins une nervure d'engagement présente une portion principale à distance du bord et une portion de largeur réduite formant la portion d'extrémité, l'épaulement étant formé par la réduction de largeur entre la portion principale et la portion d'extrémité.

Selon un mode avantageux de l'invention, la garniture comprend une portion d'extrémité configurée pour s'engager sous une autre garniture, la portion présentant un bord latéral en retrait et au moins une nervure d'appui sur le joint, s'étendant transversalement au bord et depuis le bord, sur une face intérieure de la portion. Selon un mode avantageux de l'invention, le joint comprend une portion en forme de U chaussant la feuillure de jonction, et une face située vers l'intérieur du véhicule et chevauchant la portion, l'au moins une nervure d'appui sur le joint étant en vis-à-vis de la face.

Selon un mode avantageux de l'invention, l'encoche du joint forme une ouverture dirigée vers l'intérieur du véhicule, la face intérieure de joint présentant un profil coudé entre la portion en forme de U et l'encoche, l'au moins une nervure d'appui sur le joint épousant le profil.

Selon un mode avantageux de l'invention, l'embouti intérieur est une doublure de montant latéral central ou arrière de la carrosserie.

Selon un mode avantageux de l'invention, la garniture présente une section transversale en forme de U avec deux extrémités, l'au moins un bord latéral étant à chacune des deux extrémités.

Les mesures de l'invention sont intéressantes en ce qu'elles permettent de rigidifier les garnitures concernées. Elles assurent aussi qu'une garniture intérieure reste en position dans ses joints même lorsqu'un effort est exercé sur la garniture intérieure. En outre, grâce aux mesures, le raccord entre deux garnitures est plus rigide. D'autres caractéristiques et avantages de la présente invention seront mieux compris à l'aide de la description et des dessins.

### Brève description des dessins

[Fig 1] est une vue de l'habitacle d'intérieur ;
[Fig 2] représente une section transversale d'un pied central avec une garniture ;
[Fig 3] illustre le chevauchement de deux garnitures ;
[Fig 4] montre une section transversale du joint.

### Description détaillée

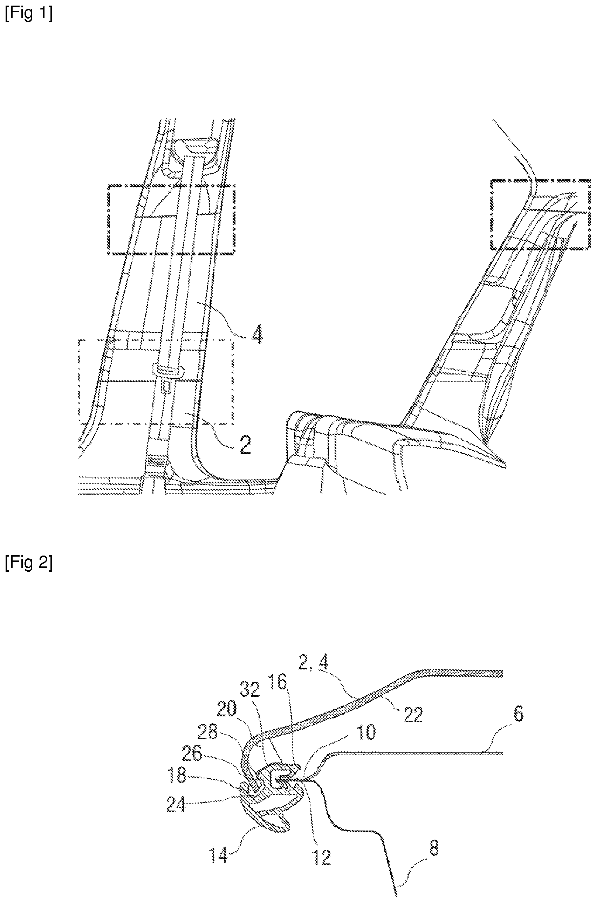

La figure 1 illustre un habitacle de véhicule automobile comprenant plusieurs zones d'accostages (encadrées) entre des garnitures intérieures. Le mode de réalisation détaillée porte sur l'accostage entre une garniture 2 de longeron avant et une garniture 4 inférieure de pied central. Cependant, l'invention peut être déclinée pour toutes les autres garnitures d'un véhicule.

La figure 2 présente une section transversale d'un pied central, comprenant un embouti intérieur 6 formant une doublure d'un montant central 8 de carrosserie. L'embouti a au moins un bord 10 qui avec le montant central 8 forme une feuillure 12 de jonction délimitant une ouverture destinée à recevoir un ouvrant. Un joint 14 comprenant une portion 16 en forme de U chausse la feuillure de jonction 12. Une garniture (intérieure) 2, 4 est disposée contre l'embouti 6, avec un bord latéral 18 adjacent au joint 14. La garniture 2, 4 présente une section transversale en forme de U avec deux extrémités (seule une extrémité est représentée dans la figure 1). La garniture 2, 4 comprend une nervure d'engagement 20 avec le joint 14. La nervure 20 s'étend transversalement au bord 18 latéral et depuis le bord 18, sur une face intérieure d'une paroi principale 22 de la garniture 2, 4. Le joint 14 forme une encoche 24 qui reçoit le bord latéral 18 et une portion d'extrémité 26 de la nervure 20. La nervure d'engagement 20 forme un épaulement 28 adjacent à la portion d'extrémité 26, l'épaulement 28 présentant une surface de butée contre le joint 14. La nervure d'engagement 20 comprend une portion principale 32 à distance du bord 18 et une portion de largeur réduite formant la portion d'extrémité 26. L'épaulement 28 est formé par la réduction de largeur entre la portion principale 32 et la portion d'extrémité 26. e. La portion principale 32 reprend les efforts par appui sur le joint 14 pour augmenter la raideur à la sollicitation d'un occupant en empêchant une flexion de la garniture 2, 4.

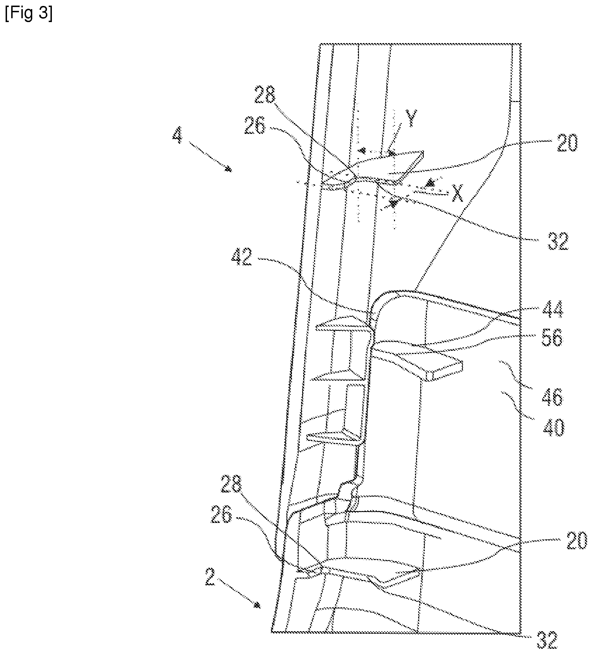

La figure 3 montre que la garniture 2 comprend une portion d'extrémité 40 configurée pour s'engager sous une autre garniture 4. La portion d'extrémité 40 présente un bord latéral 42 en retrait et une nervure d'appui 44 sur le joint 14, s'étendant transversalement au bord 42 et depuis le bord 42, sur une face intérieure 46 de la portion 40. La nervure d'appui 44 permet d'apporter une raideur de flexion, lorsqu'un occupant vient s'appuyer sur l'une des garnitures 2, 4. L'effort exercé par l'occupant est transmis à la doublure via le joint 14.

Le bord latéral 18 de la garniture 2, 4 et la nervure d'engagement 20 sont adaptés pour s'engager dans l'encoche 24 du joint 14. Un paramètre caractérisant la liaison entre la garniture 2,4 et le joint 14 est la distance X, qui se mesure entre une extrémité distale de la portion d'extrémité 26 et l'épaulement 28 de la nervure d'engagement 20. Cette distance est comprise entre 1 et 8 mm. Une distance minimale garantit le maintien de la nervure d'engagement 20 avec le bord 18 dans l'encoche 24. La taille de l'encoche 24 limite la distance maximale. L'extrémité distale de la portion d'extrémité 26 présente un biseau pour faciliter l'insertion du bord 18 de la garniture 2, 4 dans l'encoche 24 du joint 14. Avantageusement, le ratio entre la distance X et la longueur Y de la portion principale 32 est compris entre 0,3 et 3,0. Dans cette plage de valeur, la raideur de liaison entre le joint 14 et la garniture 2, 4 est optimisée pour une surface donnée de nervure, la surface étant compatible avec des contraintes d'implantation et de fabrication.

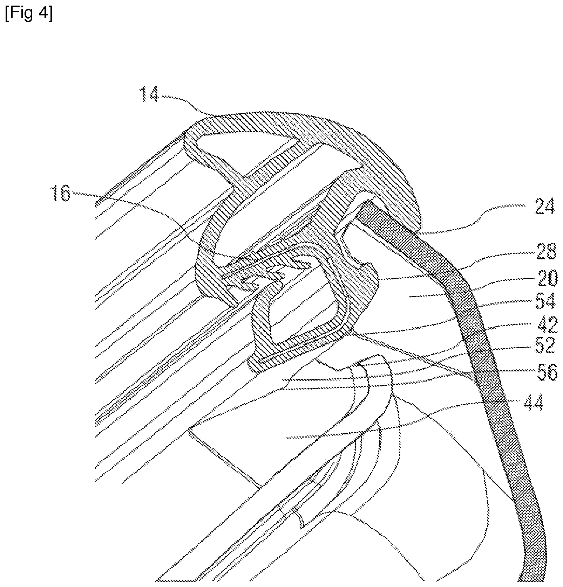

La figure 4 montre que le joint 14 comprend une portion 16 en forme de U destinée à chausser la feuillure de jonction 12 (pas représentée). Une face 52 du joint 14 est située vers l'intérieur du véhicule et chevauche la portion 16. La nervure 44 est en appui sur le joint 14 en vis-à-vis de la face 52. L'encoche 24 du joint 14 forme une ouverture dirigée vers l'intérieur du véhicule. La face intérieure 52 du joint 14 présente un profil coudé 54 entre la portion 16 en forme de U et l'encoche 24. La nervure d'appui 44 conçue pour épouser le profil du joint 14, s'étend transversalement au bord 42 et depuis le bord 42, et présente aussi un profil coudé 56.

## Revendications

1. Véhicule automobile comprenant :
- un **embouti intérieur** (6) formant une doublure d'un élément extérieur (8) de carrosserie, ledit embouti (6) ayant au moins **un bord** (10) formant avec ledit élément (8) une **feuillure de jonction** (12) délimitant une ouverture destinée à recevoir un ouvrant ;
- un **joint** (14) chaussant la feuillure de jonction (12) ;
- une **garniture** (2, 4) disposée contre l'embouti (6), avec au moins un bord latéral (18) adjacent au joint (14) ;
**caractérisé en ce que**
la garniture (2, 4) comprend au moins une nervure d'engagement (20) avec le joint (14), s'étendant transversalement à l'au moins un bord latéral (18) et depuis ledit bord (18), sur une face intérieure de ladite garniture (2, 4), et le joint (14) comporte une encoche (24) recevant le bord latéral (18) et une portion d'extrémité (26) de l'au moins une nervure (20), l'au moins une nervure d'engagement (20) forme un épaulement (28) adjacent à la portion d'extrémité (26), ledit épaulement (28) formant une surface de butée contre le joint (14).

2. Véhicule automobile selon la revendication 1, **caractérisé en ce que** l'au moins une nervure d'engagement (20) présente une portion principale (32) à distance du bord (18) et une portion de largeur réduite formant la portion d'extrémité (26), l'épaulement (28) étant formé par la réduction de largeur entre la portion principale (32) et la portion d'extrémité (26).

3. Véhicule automobile selon l'une des revendications 1 à 2, **caractérisé en ce que** la garniture (2) comprend une portion d'extrémité (40) configurée pour s'engager sous une autre garniture (4), ladite portion (40) présentant un bord latéral (42) en retrait et au moins une nervure d'appui (44) sur le joint (14), s'étendant transversalement audit bord (42) et depuis ledit bord (42), sur une face intérieure (46) de ladite portion (40).

4. Véhicule automobile selon la revendication 3, **caractérisé en ce que** le joint comprend une portion en forme de U (16) chaussant la feuillure de jonction (12), et une face (52) située vers l'intérieur du véhicule et chevauchant ladite portion (16), l'au moins une nervure d'appui (44) sur le joint (14) étant en vis-à-vis de ladite face (52).

5. Véhicule automobile selon la revendication 4, **caractérisé en ce que** l'encoche (24) du joint (14) forme une ouverture dirigée vers l'intérieur du véhicule, la face (52) intérieure dudit joint (14) présentant un profil coudé (54) entre la portion en forme de U (16) et l'encoche (24), l'au moins une nervure d'appui (44) sur le joint (14) épousant ledit profil (54).

6. Véhicule automobile selon l'une des revendications 1 à 5, **caractérisé en ce que** l'embouti intérieur (6) est une doublure de montant latéral central ou arrière de la carrosserie.

7. Véhicule automobile selon l'une des revendications 1 à 6, **caractérisé en ce que** la garniture (2, 4) présente une section transversale en forme de U avec deux extrémités, l'au moins un bord latéral (18) étant à chacune des deux extrémités.

## Patentansprüche

1. Kraftfahrzeug mit:
- ein inneres Formteil (6), daß eine Auskleidung eines äußeren Karosserieteils (8) bildet, wobei das Formteil (6) wenigstens eine Kante (10) aufweist, die zusammen mit dem Element (8) einen Verbindungsfalz (12) bildet, der eine Öffnung zur Aufnahme eines Flügels begrenzt;
- eine Dichtung (14), die den Verbindungsfalz (12) umschließt;
- eine an der Anformung (6) angeordnete Dichtung (2, 4) mit mindestens einem an die Dichtung (14) angrenzenden Seitenrand (18);
**dadurch gekennzeichnet, dass**
die Dichtung (2, 4) umfasst mindestens eine Eingriffsrippe (20) mit der Dichtung (14), die sich quer zu mindestens einem Seitenrand (18) und von diesem Rand (18) aus auf einer Innenseite der Dichtung (2, 4) erstreckt, und die Dichtung (14) umfasst eine Kerbe (24), die den Seitenrand (18) aufnimmt, und einen Endabschnitt (26) der mindestens einen Rippe (20), wobei die mindestens eine Eingriffsrippe (20) eine Schulter (28) bildet Angrenzend an den Endabschnitt (26) bildet die Schulter (28) eine Anschlagfläche an der Dichtung (14).

2. Kraftfahrzeug nach Anspruch 1, **dadurch gekennzeichnet, dass** die mindestens eine Eingriffsrippe (20) einen Hauptabschnitt (32) im Abstand von der Kante (18) und einen Abschnitt mit verringerter Breite aufweist, der den Endabschnitt (26) bildet, wobei die Schulter (28) durch die Breitenverringerung zwischen dem Hauptabschnitt (32) und dem Endabschnitt (26) gebildet ist.

3. Kraftfahrzeug nach einem der Ansprüche 1 bis 2, **dadurch gekennzeichnet, dass** die Dichtung (2) einen Endabschnitt (40) aufweist, der so gestaltet ist, dass er unter eine andere Dichtung (4) eingreift, wobei der Abschnitt (40) einen zurückgesetzten Seitenrand (42) und wenigstens eine Stützrippe (44) an der Dichtung (14) aufweist, die sich quer zu dem Rand (42) und von dem Rand (42) aus auf einer Innenfläche (46) des Abschnitts (40) erstreckt.

4. Kraftfahrzeug nach Anspruch 3, **dadurch gekennzeichnet, dass** die Dichtung einen U-förmigen Abschnitt (16) aufweist, der den Verbindungsfalz (12) auskleidet, und eine Fläche (52), die zum Fahrzeuginneren hin angeordnet ist und den Abschnitt (16) überlappt, wobei die mindestens eine Stützrippe (44) an der Dichtung (14) der Fläche (52) gegenüberliegt.

5. Kraftfahrzeug nach Anspruch 4, **dadurch gekennzeichnet, dass** die Kerbe (24) der Dichtung (14) eine Öffnung bildet, die zum Inneren des Fahrzeugs gerichtet ist, wobei die Innenfläche (52) der Dichtung (14) ein gekrümmtes Profil (54) zwischen dem U-förmigen Abschnitt (16) und der Kerbe (24) aufweist, wobei die mindestens eine Stützrippe (44) an der Dichtung (14) an das Profil (54) angepasst ist.

6. Kraftfahrzeug nach einem der Ansprüche 1 bis 5, **dadurch gekennzeichnet, dass** der Innenansatz (6) eine seitliche Mittelpfosten- oder Hinterpfostenauskleidung der Karosserie ist.

7. Kraftfahrzeug nach einem der Ansprüche 1 bis 6, **dadurch gekennzeichnet, dass** der Belag (2, 4) einen U-förmigen Querschnitt mit zwei Enden aufweist, wobei an beiden Enden jeweils die mindestens eine Seitenkante (18) angeordnet ist.

## Claims

1. Motor vehicle comprising:
- an inner press (6) forming a lining of an outer bodywork element (8), said press (6) having at least one edge (10) forming with said element (8) a junction rebate (12) delimiting an opening intended to receive an opening leaf;
- a joint (14) fitting the junction rebate (12);
- a lining (2, 4) arranged against the press-formed part (6), with at least one lateral edge (18) adjacent to the joint (14);
**characterized by**
the fitting (2, 4) comprises at least one rib (20) for engagement with the seal (14), extending transversely to the at least one lateral edge (18) and from said edge (18), on an inner face of said fitting (2, 4), and the seal (14) comprises a notch (24) receiving the lateral edge (18) and an end portion (26) of the at least one rib (20), the at least one engagement rib (20) forming an adjacent shoulder (28) the end portion (26), said shoulder (28) forming a stop surface against the seal (14).

2. Motor vehicle according to claim 1, **characterized in that** the at least one engagement rib (20) has a main portion (32) at a distance from the edge (18) and a reduced-width portion forming the end portion (26), the shoulder (28) being formed by the reduction in width between the main portion (32) and the end portion (26).

3. Motor vehicle according to one of Claims 1 to 2, **characterized in that** the lining (2) comprises an end portion (40) configured to engage under another lining (4), the said portion (40) having a recessed lateral edge (42) and at least one bearing rib (44) on the joint (14), extending transversely to the said edge (42) and from the said edge (42), on an inner face (46) of the said portion (40).

4. A motor vehicle according to claim 3, **characterized in that** the joint comprises a U-shaped portion (16) fitting over the junction rebate (12), and a face (52) situated towards the inside of the vehicle and overlapping said portion (16), the at least one bearing rib (44) on the joint (14) facing said face (52).

5. Motor vehicle according to claim 4, **characterized in that** the notch (24) of the seal (14) forms an opening directed towards the interior of the vehicle, the interior face (52) of said seal (14) having an elbowed profile (54) between the U-shaped portion (16) and the notch (24), the at least one bearing rib (44) on the seal (14) fitting said profile (54).

6. Motor vehicle according to one of Claims 1 to 5, **characterized in that** the inner stamping (6) is a lining for the central or rear lateral upright of the bodywork.

7. Motor vehicle according to one of Claims 1 to 6, **characterized in that** the lining (2, 4) has a U-shaped cross-section with two ends, the at least one lateral edge (18) being at each of the two ends.
